# EUROPÄISCHE PATENTANMELDUNG

(11) **EP 2 977 840 A1**
(43) Veröffentlichungstag der Anmeldung: **27.01.2016**
(21) Anmeldenummer: 14178189.8
(22) Anmeldetag: 23.07.2014
(51) Int. Cl.: G05B 19/409, G05B 19/042, G06F 3/01

(54) **Fehlersichere Bedienung eines Gerätes aus dem Bereich der industriellen Automatisierungstechnik mittels Gesten**

(71) Anmelder: Siemens Aktiengesellschaft, 80333 München (DE)
(72) Erfinder: Schwesig, Günter, 91054 Erlangen (DE); Singer, Marc, 91301 Forchheim (DE); Walders, Hanno, 91056 Erlangen (DE)

(57) **Zusammenfassung**

Bei einem Gerät (1) aus dem Bereich der industriellen Automatisierungstechnik, welches ein Eingabemittel (2) umfasst, mit dem zum Auslösen von Bedienfunktionen wenigstens zweidimensionale Gesten eines Benutzers erkennbar sind, soll eine sichere Bedienung in einfacher Weise ermöglicht werden. Hierfür werden zunächst fehlersichere Gesten definiert, die das unbeabsichtigte Auslösen einer Bedienfunktion mit hoher Wahrscheinlichkeit verhindern. Anschließend erfolgt eine Verknüpfung der fehlersicheren Gesten mit Bedienfunktionen. Anschließend erfolgen das Erkennen der fehlersicheren Gesten bei der Bedienung des Gerätes (1) durch den Benutzer und das Auslösen der einer bestimmten fehlersicheren Geste jeweils zugeordneten Bedienfunktion, wobei sicherheitsrelevante Bedienfunktionen ausschließlich durch fehlersichere Gesten ausgelöst werden.

## Beschreibung

Die Erfindung betrifft ein Verfahren zur fehlersicheren Bedienung eines Gerätes aus dem Bereich der industriellen Automatisierungstechnik sowie ein entsprechendes Gerät aus dem Bereich der industriellen Automatisierungstechnik.

Im Rahmen der industriellen Automatisierungstechnik wird eine Vielzahl unterschiedlicher Steuerungs- und Regelungssysteme eingesetzt, z.B. zur Steuerung industrieller Prozesse oder zur Steuerung von Produktionsmaschinen, Werkzeugmaschinen, Robotern etc. Insbesondere zur Bedienung, Beobachtung und Inbetriebsetzung dieser Systeme bzw. Maschinen werden Geräte wie Bedientafeln, Maschinensteuertafeln, Tastaturen, Handbediengeräte, Joysticks etc. verwendet, die unter den Oberbe-griff HMI (Human Machine Interface) zusammengefasst werden. Das Auslösen sicherheitsrelevanter Aktionen ist über solche Geräte nur bedingt möglich. Beispielsweise werden dafür separate Sicherheitssteuerungen eingesetzt, an die Schalter und Taster zweikanalig angeschlossen sind, die entsprechend ausgewertet werden. Diese Realisierung ist jedoch hinsichtlich der Verdrahtung aufwändig und daher entsprechend kostenintensiv.

Schon lange besteht daher der Wunsch, sichere Bedienhandlungen direkt auf den oben genannten Geräten zu realisieren, ohne dabei Schalter und Taster zweikanalig anschließen zu müssen. Es müssen daher Eingabemittel gefunden werden, die die entsprechenden Sicherheitsanforderungen anderweitig erfüllen. Ein schwer lösbares Problem ist z.B. Taster zu finden, die nicht verklemmen können. Wenn eine Taste klemmt, so kann dieser Fehler ohne einen zweikanaligen Anschluss nicht aufgedeckt werden und schon mit diesem einen Fehler ist die Sicherheit bei der Bedienung des Gerätes nicht mehr gewährleistet. Gleichzeitig besteht auch im Industriebereich zunehmend der Wunsch, insbesondere aus dem Consumer-Bereich bekannte Eingabemittel wie Touchscreens oder Joysticks verwenden zu können. Auch dies ist jedoch nur möglich, wenn die Fehlersicherheit gewährleistet wird. Hierzu kann in Verbindung mit den zuletzt genannten Eingabemitteln eine sichere Bedienhandlung beispielsweise durch die Kombination mit einer sicheren Zustelleinrichtung erreicht werden.

Besondere Anforderungen an elektronische Geräte, die Sicherheitsfunktionen ausführen oder deren Ausfall ein maßgebliches Risiko für Mensch oder Umwelt bedeutet, sind beispielsweise in der Norm IEC 61508 geregelt. Diese Norm ist auch für eine Vielzahl an Geräten aus dem Bereich der industriellen Automatisierungstechnik relevant.

Aufgabe der vorliegenden Erfindung ist es, ein Verfahren zur fehlersicheren Bedienung eines Gerätes aus dem Bereich der industriellen Automatisierungstechnik sowie ein entsprechendes Gerät bereitzustellen, durch die in einfacher Weise eine fehlersichere Bedienung gewährleistet wird.

Diese Aufgabe wird gelöst durch ein Verfahren zur fehlersicheren Bedienung eines Gerätes aus dem Bereich der industriellen Automatisierungstechnik, welches ein Eingabemittel umfasst, mit dem zum Auslösen von Bedienfunktionen wenigstens zweidimensionale Gesten eines Benutzers erkennbar sind, mit den Schritten:
- Definition fehlersicherer Gesten, die das unbeabsichtigte Auslösen einer Bedienfunktion mit hoher Wahrscheinlichkeit verhindern,
- Verknüpfung der fehlersicheren Gesten mit Bedienfunktionen,
- Erkennen der fehlersicheren Gesten bei der Bedienung des Gerätes durch den Benutzer und Auslösen der einer bestimmten fehlersicheren Geste jeweils zugeordneten Bedienfunktion, wobei sicherheitsrelevante Bedienfunktionen ausschließlich durch fehlersichere Gesten ausgelöst werden.

Ferner wird diese Aufgabe gelöst durch ein Gerät aus dem Bereich der industriellen Automatisierungstechnik, umfassend:
- Speichermittel zum Speichern von Daten bezüglich fehlersicherer Gesten,
- Eingabemittel zur Betätigung durch einen Benutzer, wobei durch die Eingabemittel wenigstens zweidimensionale Gesten des Benutzers erfassbar sind,
- Mittel zum Erkennen der fehlersicheren Gesten bei der Bedienung durch den Benutzer und Auslösen der einer bestimmten fehlersicheren Geste jeweils zugeordneten Bedienfunktion, wobei sicherheitsrelevante Bedienfunktionen ausschließlich durch fehlersichere Gesten auslösbar sind.

Die Erfindung geht aus von einem herkömmlichen Gerät aus dem Bereich der industriellen Automatisierungstechnik, welches für die Verwendung im Bereich der industriellen Automatisierungstechnik allen dafür erforderlichen Sicherheitsanforderungen genügt. Insbesondere genügt das Gerät den in der Norm IEC 61508 festgelegten Bestimmungen. Ein derartiges Gerät soll nun durch ein Eingabemittel zur Eingabe von Gesten erweitert werden. Die Bedienung durch Gesten birgt jedoch in hohem Maße die Gefahr für Fehlbedienungen und stellt somit ein Sicherheitsrisiko dar. Daher würde ein derartiges Gerät ohne weitere Sicherheitsmaßnahmen nicht mehr den geforderten Sicherheitsanforderungen genügen.

Gemäß der Erfindung umfasst das Gerät aus dem Bereich der industriellen Automatisierungstechnik ein Eingabemittel, mit dem zum Auslösen von Bedienfunktionen wenigstens zweidimensionale Gesten eines Benutzers erkennbar sind. Ein derartiges Eingabemittel ist beispielsweise ein Touchscreen, mit dem der Benutzer durch entsprechende Berührung der Oberfläche des Touchscreens zweidimensionale Gesten erzeugen und eingeben kann. Beispiele für Eingabemittel zur Eingabe dreidimensionaler Gesten sind entsprechende Joysticks, 3D-Mäuse, KameraSysteme zur Gestenerfassung etc. Zur Bedienung eines elektronischen Gerätes ist es jedoch nicht nur notwendig entsprechende Gesten zu erkennen, sondern den erkennbaren Gesten müssen auch eindeutig bestimmte Bedienfunktionen zuordenbar sein. Derartige Bedienfunktionen sind beispielsweise das Einschalten des betreffenden Gerätes, das Ausschalten eines Gerätes, Werte von Parametern erhöhen, Werte von Parametern reduzieren etc. Weiterhin kann die Bedienfunktion nicht lediglich das Gerät zum Bedienen und Beobachten selbst betreffen, sondern ebenfalls ein mit diesem verbundenes weiteres Gerät aus dem Bereich der industriellen Automatisierungstechnik, wie etwa einen Motor, einen Umrichter, einen Controller oder eine Steuerung.

Die Fehlersicherheit wird im Zusammenhang mit der Erfindung insbesondere dadurch erreicht, dass fehlersichere Gesten definiert werden, die das unbeabsichtigte Auslösen einer Bedienfunktion mit hoher Wahrscheinlichkeit verhindern. Übliche Bedienhandlungen zur Bedienung eines Touchscreens sind beispielsweise die Berührung bestimmter Stellen auf dem Touchscreen oder eine typische Wischbewegung. Derartige, bei bekannten Touchscreen-Geräten häufig vorkommende Bedienhandlungen sind unsicher, da sie leicht auch unbeabsichtigt erfolgen können. Sie sind daher als fehlersichere Gesten nicht erlaubt. Als fehlersichere Gesten kommen beispielsweise bestimmte Zahlen oder Buchstaben in Betracht, die sich auffällig von anderen Zahlen oder Buchstaben unterscheiden, beispielsweise die Zahlen 0, 5, 8, 9 oder die Buchstaben A, E, X etc.

Dass das unbeabsichtigte Auslösen einer Bedienfunktion "mit hoher Wahrscheinlichkeit" verhindert wird soll heißen, dass die Bedienung durch den Benutzer so sicher sein soll wie die Bedienung eines vergleichbaren herkömmlichen Gerätes mit alternativen Mitteln zum Verhindern eines unbeabsichtigten Auslösens einer sicherheitsrelevanten Bedienfunktion. Es ist bekannt, dass 100% Fehlersicherheit in der Regel nicht zu erreichen ist, insbesondere wenn der "Fehlerfaktor Mensch" in Frage kommt. Bei bislang bekannten Geräten mit erhöhten Sicherheitsanforderungen wurde die erforderliche Fehlersicherheit beispielsweise dadurch erreicht, dass zum fehlersicheren Auslösen einer Bedienfunktion zwei Tasten gleichzeitig gedrückt werden müssen. Auch dies schließt unbeabsichtigte Fehlbedienungen mit einer hohen Wahrscheinlichkeit, jedoch nicht zu 100% aus. Die Definition fehlersicherer Gesten gemäß der Erfindung gibt hier einen gewissen Spielraum. Es können Gesten definiert werden, die so komplex sind, dass die Fehlersicherheit sehr nahe bei 100% liegt. Dies erschwert jedoch die Bedienung für den Benutzer, da die entsprechenden Gesten dann oft nicht richtig eingegeben und die zugeordneten Bedienfunktionen nicht ausgelöst werden. Auch kann die Definition einer neuen fehlersicheren Geste nur in Bezug zu den bereits definierten und zur Bedienung des Gerätes bereits vorhandenen fehlersicheren Gesten erfolgen. Die fehlersicheren Gesten müssen sich nämlich untereinander hinreichend stark unterscheiden. Auch hier besteht ein gewisser Ermessensspielraum, zwischen welchen Gesten noch eine "fehlersichere Unterscheidung" möglich ist und welche Gesten so ähnlich sind, dass eine Verwechslung nicht mehr "mit hoher Wahrscheinlichkeit" ausgeschlossen werden kann. Andererseits liegt aber gerade in der Definition der Gesten auch ein Vorteil der Erfindung gegenüber herkömmlichen Lösungen, da prinzipiell nahezu beliebig komplexe Gesten definierbar und damit die versehentliche Eingabe einer fehlersicheren Geste praktisch zu 100% ausgeschlossen werden kann. Die Höhe der Wahrscheinlichkeit, mit der unbeabsichtigte Fehlbedienungen ausgeschlossen werden können, ist somit in gewisser Weise durch den Gerätehersteller bzw. den Benutzer des Gerätes durch die Definition der fehlersicheren Gesten vorgebbar. Dass unbeabsichtigte Fehlbedienungen mit einer hohen Wahrscheinlichkeit ausgeschlossen werden können, soll insbesondere heißen, dass unbeabsichtigte Fehlbedienungen mit den jeweiligen Sicherheitsanforderungen genügender Wahrscheinlichkeit ausgeschlossen werden können.

Die Erfindung sieht vor, dass eine definierte fehlersichere Geste eindeutig mit einer bestimmten Bedienfunktion verknüpft wird. Dadurch wird gewährleistet, dass exakt vorherbestimmt ist, welche Bedienfunktion durch die entsprechende fehlersichere Geste ausgelöst wird.

Die Erfindung unterscheidet zwischen sicherheitsrelevanten Bedienfunktionen und anderen, nicht sicherheitsrelevanten Bedienfunktionen. Sicherheitsrelevante Bedienfunktionen sind - wie der Name bereits angibt - alle Funktionen, die in irgendeiner Weise Auswirkungen auf die Sicherheit von Personen oder Geräten in der betreffenden Automatisierungsumgebung haben können. Sicherheitsrelevante Bedienfunktionen sind insbesondere all die Bedienfunktionen, die direkte Auswirkungen auf die Steuerung einer Maschine oder Anlage haben und dort beispielsweise einen Motor einschalten oder eine Motor-Drehzahl verändern. Nicht sicherheitsrelevante Bedienfunktionen hingegen haben keine direkten Auswirkungen auf die Automatisierungsumgebung, in die das Gerät eingebunden ist. Beispiele für nicht sicherheitsrelevante Bedienfunktionen sind Funktionen zum Navigieren in unterschiedlichen Menüs des Gerätes. Hierzu können auch Wischbewegungen oder die Berührung einer "virtuellen Taste" auf dem Touchscreen erlaubt sein.

Sowohl die Definition fehlersicherer Gesten als auch die Bestimmung sicherheitsrelevanter Bedienfunktionen kann mit dem betreffenden Gerät selbst erfolgen. Diesbezügliche Daten werden vorzugswiese jedoch außerhalb des betreffenden Gerätes erzeugt, beispielsweise in einer Programmierumgebung, und mittels Software auf das betreffende Gerät geladen. Erfindungsgemäß erfolgt eine Verknüpfung sicherheitsrelevanter Bedienfunktionen, also solcher Bedienfunktionen, die Einfluss auf die Sicherheit von Personen oder Geräten bzw. Maschinen der betreffenden Automatisierungsumgebung haben, und fehlersicherer Gesten. Auch diese Zuordnung kann durch eine entsprechende Bedienung des Gerätes selbst erfolgen, beispielsweise in dem auf dem Display des Gerätes entsprechende sicherheitsrelevante Bedienfunktionen und fehlersichere Gesten angezeigt werden und zwischen diesen Verknüpfungen hergestellt werden können. Für die praktische Durchführung ist hierfür eine Vielzahl an Möglichkeiten aus der einschlägigen Computer-Fachliteratur bekannt. Vorteilhaft und in der Regel komfortabler kann jedoch auch diese Zuordnung außerhalb des betreffenden Gerätes aus dem Bereich der Automatisierungstechnik erfolgen und entsprechende Daten werden anschließend durch Programmierung bzw. Software-Download auf das Gerät übertragen. Auch die für die Zuordnung, Programmierung und Datenübertragung benötigte Hardware ist dem Fachmann bekannt.

Die Erfindung sieht vor, dass sicherheitsrelevante Bedienfunktionen ausschließlich durch fehlersichere Gesten auslösbar sind. Dies wird insbesondere dadurch erreicht, dass durch eine entsprechende Software den sicherheitsrelevanten Bedienfunktionen nur solche Gesten zugeordnet werden können, die explizit als "fehlersicher" eingestuft sind. Die Verknüpfung anderer (nicht fehlersicherer) Gesten mit sicherheitsrelevanten Bedienfunktionen soll nicht möglich sein. Beispielsweise könnte bei einer entsprechenden beabsichtigten Zuordnung anstatt der Verknüpfung lediglich eine Fehlermeldung erzeugt werden. Alternativ könnten bei der Anzeige sicherheitsrelevanter Bedienfunktionen ausschließlich fehlersichere Gesten angezeigt werden, die prinzipiell mit den Bedienfunktionen verknüpft werden können. Andere Gesten werden erst gar nicht angezeigt und stehen damit auch nicht zur Auswahl. Neben den genannten Methoden sind noch viele andere denkbar, durch die erreicht werden kann, dass sicherheitsrelevante Bedienfunktionen ausschließlich durch fehlersichere Gesten auslösbar sind. Die Erfindung ist daher nicht auf die genannten Methoden beschränkt.

Vorteilhaft umfasst ein erfindungsgemäßes Gerät Mittel zum Erkennen der definierten fehlersicheren Gesten, insbesondere entsprechende Speicher-, Sensor- und Auswertemittel. Die Eingabe einer fehlersicheren Geste durch den Benutzer wird beispielsweise dadurch erkannt, dass ein Vergleich der Daten, die aus der Eingabe einer Geste durch den Benutzer generiert werden, mit den in einem Speicher des Gerätes hinterlegten Daten bezüglich fehlersicherer Gesten erfolgt. Kann aus dem Vergleich eindeutig eine fehlersichere Geste erkannt werden, so wird die der erkannten fehlersicheren Geste zugeordnete Bedienfunktion ausgelöst. Das Gerät umfasst auch die hierzu erforderlichen Mittel, die wenigsten einen Speicher, einen Prozessor und ein entsprechendes Ablaufprogramm umfassen.

Die Erfindung ermöglicht dadurch die Verwendung moderner Eingabemittel wie Touchscreens oder Joysticks auch zur Steuerung von Geräten aus dem Bereich der industriellen Automatisierungstechnik mit erhöhten Sicherheitsanforderungen.

Eine Weiterbildung der Erfindung sieht vor, dass in einer fehlersicheren Betriebsart des Gerätes durch das Eingabemittel ausschließlich solche Bedienfunktionen auslösbar sind, die mit einer fehlersicheren Geste verknüpft sind. Diese Betriebsart ist insbesondere dann sinnvoll, wenn sich die Automatisierungsumgebung, in das Gerät eingebunden ist, in Betrieb befindet.

Bei dem erfindungsgemäßen Gerät kann ferner vorgesehen sein, dass es ausschließlich in der fehlersicheren Betriebsart betrieben werden kann. Damit ist die Bedienung mit dem betreffenden Eingabemittel nur durch Gesten möglich, die als fehlersicher gelten. Vorzugsweise ist bei dem betreffenden Gerät jedoch zumindest zeitweilig auch eine zweite Betriebsart möglich, in der auch Benutzereingaben in Form von Gesten möglich sind, die nicht als fehlersicher gelten. Dies ist beispielsweise dann möglich, wenn ein durch das Gerät gesteuertes weiteres Gerät oder eine entsprechende Maschine oder Anlage außer Betrieb ist und somit kein direktes Sicherheitsrisiko besteht.

Je nach Anwendung lassen sich unterschiedliche "sichere" Bewegungen definieren, wobei wesentlich ist, dass sich diese von den Fehlerbildern der verwendeten Komponenten und zu erwartenden Fehlbedienungen, z.B. versehentliches Anstoßen an das Bedienelement, unterscheiden. Dadurch kann das Bediensystem dann sicher gegen technische Fehler der Komponenten oder das versehentliche Bedienen gemacht werden. Die Definition fehlersicherer Gesten wird in der Regel außerhalb des betreffenden Gerätes aus dem Bereich der industriellen Automatisierungstechnik erfolgen, zum Beispiel beim Hersteller des betreffenden Gerätes und unter Zuhilfenahme weiterer Geräte oder Systeme. In besonderen Fällen kann die Definition jedoch auch direkt mittels des besagten Gerätes aus dem Bereich der industriellen Automatisierungstechnik erfolgen. Stets muss jedoch bei der Definition einer neuen Geste ein Vergleich mit allen bereits definierten und für das betreffende Gerät vorgesehenen fehlersicheren Gesten erfolgen, so dass sich die neue Geste in hohem Maß von allen bereits zugelassenen fehlersicheren Gesten unterscheidet. Weiterhin muss sich die neue Geste auch in hohem Maße von solchen Gesten unterscheiden, die durch unbeabsichtigte Berührungen des Eingabemittels ausgeführt werden. Nur wenn beide zuletzt genannten Bedingungen erfüllt sind, kann auch die neue Geste als "fehlersicher" eingestuft werden. Daten bezüglich aller zur Bedienung des Gerätes zugelassener Gesten werden in einem Speicher des Gerätes hinterlegt. Zum Erkennen fehlersicherer Gesten erfolgt insbesondere ein Vergleich der in dem Speicher hinterlegten Daten mit den Daten, die von dem Eingabemittel als Reaktion auf Bedienhandlungen des Benutzers erzeugt werden.

Im Zusammenhang mit der Erfindung wird als "Geste" auch eine Abfolge von Bedienhandlungen (Bediensequenz) verstanden, die insbesondere auch eine bestimmte Abfolge von Zahlen und/oder Buchstaben umfassen kann. Durch derartige komplexe Gesten kann eine nahezu beliebig hohe Unterscheidungskraft zwischen den einzelnen fehlersicheren Gesten erreicht werden. Fehler bei der Gesten-Erkennung oder ein unbeabsichtigtes Auslösen einer Bedienfunktion können damit nahezu ausgeschlossen werden.

Die durch die Erfindung erreichte Sicherheit kann weiterhin dadurch erhöht werden, dass eine fehlersichere Geste innerhalb einer bestimmten, insbesondere vorgebbaren Zeit eingegeben werden muss oder dass die entsprechende fehlersichere Geste innerhalb eines bestimmten Bildschirmbereichs oder in einer bestimmten Größe eingegeben werden muss. Insgesamt lässt sich durch derartige vordefinierte fehlersichere Gesten verhindern, dass diese unbeabsichtigt durch eine entsprechende Berührung des betreffenden Touchscreens eingegeben werden.

Gemäß einer Ausführungsform der Erfindung kann die Bedienung mittels fehlersicherer Gesten auch zur Funktionsüberprüfung des Gerätes verwendet werden, indem beispielsweise in bestimmten Zeitabständen oder nach bestimmten Ereignissen bestimmte, fehlersichere Gesten eingegeben werden müssen. Wird eine entsprechende fehlersichere Geste nicht in der vorgegebenen Zeit oder nicht in der vorbestimmten Form eingegeben, so wird vorzugsweise eine Fehlermeldung erzeugt und das betreffende Gerät für die weitere Bedienung gesperrt. Zum Entsperren kann dann die Eingabe weiterer fehlersicherer Gesten erforderlich sein.

Werden zur Bedienung des Gerätes neben fehlersicheren Gesten auch unsichere Bedienhandlungen gefordert, beispielsweise die Berührung bestimmter Stellen eines Touchscreens, so kann die Sicherheit dadurch gewährleistet werden, dass unsichere Eingaben erst durch Eingabe einer bestimmten fehlersicheren Geste bestätigt werden müssen, bevor die zugeordneten Bedienfunktionen ausgeführt werden. Das betreffende Gerät wechselt somit zwischen einer fehlersicheren Betriebsart, in der ausschließlich fehlersichere Gesten zulässig sind, und einer nicht fehlersicheren Betriebsart, in der auch unsichere Gesten möglich sind, hin und her.

Eine weitere Möglichkeit einer erfindungsgemäßen, fehlersicheren Bedienung besteht darin, dass durch Eingabe einer bestimmten fehlersicheren Geste das Eingabemittel für eine bestimmte Zeitdauer freigegeben wird, für die dann auch unsichere Gesten zugelassen sind. So kann beispielsweise bei einem Joystick durch eine kreisende Bewegung (0) mit anschließender Nulllage als sichere Freigabesequenz die Bedienung für eine bestimmte Zeitdauer freigegeben werden. Nach Ablauf dieser Zeitdauer oder nach längerem Verweilen in der Nulllage endet diese Bediensequenz und eine neue Bediensequenz kann nur durch Eingabe einer bestimmten, fehlersicheren Geste gestartet werden. Auch hier erfolgen bei dem betreffenden Gerät eine fehlersichere Betriebsart und eine nicht fehlersichere Betriebsart im Wechsel.

Zusammenfassend wird erfindungsgemäß die Sicherheitsmaßnahme nicht in dem Bedienelement selbst oder durch Anwendung mehrerer Bedienelemente (Redundanz), sondern in einer übergeordneten Ebene durchgeführt, in der eine Auswertung einer vorgenommenen Bedienhandlung bzw. Bedienabfolge erfolgt. Damit reduzieren sich die Anforderungen an das Bedienelement erheblich, wobei nur gewährleistet sein muss, dass sich mögliche Fehlerbilder des betreffenden Bedienelements von den vereinbarten komplexen Bedienhandlungen (Gesten) ausreichend unterscheiden. So erreicht man einen Schutz vor versehentlicher Fehlbedienung.

Prinzipiell sind die genannten Maßnahmen für jedes Bedienelement geeignet. Bei komplexen Bedienelementen wie Joysticks oder Touchscreens lassen sich diese jedoch besser vom Bediener durchführen als mit einfacheren Bedienelementen und sie werden auch nicht in dem Maße als zusätzliche Sicherheitsmaßnahmen wahrgenommen, die sich störend auf den normalen Bedienablauf auswirken.

Die Erfindung wird nachfolgend anhand von Ausführungsbeispielen näher erläutert. Es zeigen:
- FIG 1: die wesentlichen Verfahrensschritte bei der Durchführung des erfindungsgemäßen Verfahrens und
- FIG 2: das Blockschaltbild eines Gerätes zur Durchführung eines erfindungsgemäßen Verfahrens.

Gemäß dem erfindungsgemäßen Verfahren werden zur fehlersicheren Bedienung eines Gerätes aus dem Umfeld der industriellen Automatisierungstechnik zunächst in einem ersten Schritt S1 fehlersichere Gesten definiert, die das unbeabsichtigte Auslösen einer Bedienfunktion mit hoher Wahrscheinlichkeit verhindern. Dies bedeutet, dass einfache Gesten wie das Berühren eines Touchscreens innerhalb eines bestimmten Bildschirmbereiches oder eine im Wesentlichen geradlinige Bewegung über den Bildschirmbereich nicht zulässig sind, da derartige Gesten beispielsweise auch bei einer unbeabsichtigten Berührung des Touchscreens erzeugt werden können. Als fehlersichere Gesten kommen insbesondere bestimmte Ziffern oder Buchstaben des Alphabets in Betracht, die sich grundlegend von anderen Ziffern oder Buchstaben unterscheiden. So ist es beispielsweise nicht zulässig, dass ein Kreis sowohl als Buchstabe 0 als auch als Ziffer 0 vorgesehen wird, weil diesbezüglich eine eindeutige Unterscheidung nicht möglich wäre.

In einem darauffolgenden Verfahrensschritt S2 erfolgt eine Verknüpfung der definierten Gesten mit bestimmten Bedienfunktionen des Gerätes. Damit sich ein Benutzer die Zuordnung leichter merken kann, ist es sinnvoll, dass zwischen den Gesten und den zugeordneten Bedienfunktionen jeweils ein bekannter Bezug besteht. So ist es bereits gängige Praxis, einen Einschaltknopf für ein Gerät mit dem Symbol "I" oder einen Ausschaltknopf mit dem Symbol "0" zu belegen. Ein weiteres Beispiel einer logischen und daher leicht einprägsamen Verknüpfung von Gesten und Funktionen wäre beispielsweise eine Kreisbewegung im Uhrzeigersinn zur Erhöhung eines Parameters, wobei der Betrag der Erhöhung und die Zeitdauer, in der der Parameter erhöht wird, von der Geschwindigkeit und/oder der Dauer abhängen können, mit der die Kreisbewegung ausgeführt wird. Analog könnte eine Kreisbewegung entgegen dem Uhrzeigersinn zum Reduzieren des Wertes eines Parameters verwendet werden.

In einem weiteren Verfahrensschritt S3 wird ein Eingabemittel zur Betätigung durch einen Benutzer bereitgestellt, wobei durch das Eingabemittel wenigstens zweidimensionale Gesten erzeugbar und in das Gerät eingebbar sind und wobei weiterhin den Gesten Bedienfunktionen für das Gerät zugeordnet werden können. Als Eingabemittel kommen Touchscreens, Joysticks, Computer-Mäuse, 3D-Mäuse, Kamerasysteme zur Erfassung von Gesten und Bewegungen etc. in Betracht. Mittels dieser Eingabemittel können zwei- und höher-dimensionale Gesten erfasst und in das Gerät eingegeben werden.

In einem nachfolgenden Verfahrensschritt S4 werden schließlich während des Betriebs des Gerätes Bedienhandlungen des Benutzers in Form von Gesten mittels des Eingabemittels erkannt. Gemäß der Erfindung werden sicherheitsrelevante Bedienfunktionen nur dann ausgelöst, wenn eine der jeweiligen sicherheitsrelevanten Bedienfunktion zugeordnete fehlersichere Geste erkannt wird.

Befindet sich das betreffende Gerät in einer fehlersicheren Betriebsart, die sich beispielsweise dadurch auszeichnet, dass das betreffende Gerät gerade in eine Automatisierungsumgebung eingebunden ist, mit der eine Maschine oder Anlage gesteuert wird und eine Benutzereingabe erwartet wird, die sich auf die Steuerung der Maschine oder Anlage auswirkt, so ist eine Bedienung des Gerätes mittels des Eingabemittels nur durch Eingabe von fehlersicheren Gesten möglich. Wird in dieser Betriebsart eine fehlersichere Geste erkannt, so wird die der erkannten, fehlersicheren Geste jeweils zugeordnete Bedienfunktion ausgelöst. Insgesamt wird durch dieses Verfahren eine einfache und sichere Bedienung des Gerätes ermöglicht.

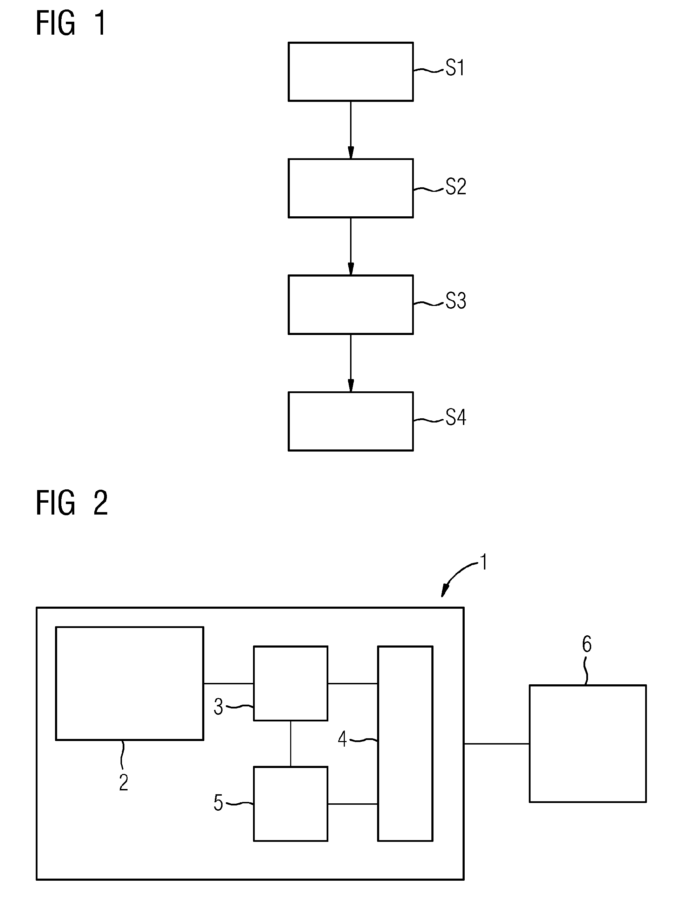

Figur 2 veranschaulicht die Erfindung anhand eines Gerätes 1 aus dem Bereich der industriellen Automatisierungstechnik, welches im Ausführungsbeispiel als HMI-Gerät (Human Machine Interface) ausgebildet ist. Das Gerät 1 umfasst als Eingabemittel einen Touchscreen 2, auf dessen Oberfläche durch entsprechende Berührung durch einen Benutzer zweidimensionale Gesten in das Gerät 1 eingegeben werden können. Daten bezüglich der zur Bedienung des Gerätes 1 möglichen Gesten sind in einem Speichermittel in Form eines Speichers 4 hinterlegt. Ein Touchscreen-Controller 3 erfasst mittels des Touchscreens 2 vorgenommene Bedienhandlungen und vergleicht die von dem Touchscreen 2 bei der Bedienung erzeugten Daten mit den im Speicher 4 hinterlegten Daten. Wird dadurch in einer von dem Benutzer vorgenommenen Bedienhandlung eine definierte Geste erkannt, so wird dadurch eine bestimmte, der jeweiligen Geste zugeordnete Bedienfunktion bei dem betreffenden Gerät 1 ausgelöst. Daten bezüglich der möglichen Bedienfunktionen sowie die Zuordnung zu den jeweiligen Gesten sind ebenfalls in dem Speicher 4 hinterlegt. Zur Abarbeitung einer in der beschriebenen Weise ausgelösten Bedienfunktion umfasst das Gerät 1 ferner eine Steuereinheit 5, die sowohl mit dem Touchscreen-Controller 3 als auch mit dem Speicher 4 verbunden ist.

Das Gerät 1 unterscheidet zwischen sicherheitsrelevanten Bedienfunktionen und nicht sicherheitsrelevanten Bedienfunktionen. Eine bestimmte sicherheitsrelevante Bedienfunktion kann durch eine Benutzereingabe mittels des Touchscreen 2 nur dann ausgeführt werden, wenn sie mit einer entsprechenden fehlersicheren Geste verknüpft ist und diese Geste erkannt wird.

Üblicherweise betreffen die von dem HMI-Gerät 1 ausgeführten Bedienfunktionen nicht nur das Gerät 1 selbst, sondern sie können weitreichende Auswirkungen auf das gesamte industrielle Automatisierungssystem haben, in die das Gerät 1 eingebunden ist. Dies ist in Figur 2 dadurch veranschaulicht, dass das HMI-Gerät 1 mit einem weiteren Gerät der industriellen Automatisierungsumgebung verbunden ist, beispielsweise einer industriellen Steuerung 6. Letztendlich wird somit über das HMI-Gerät 1 auch eine sichere Bedienung der industriellen Steuerung 6 ermöglicht.

## Patentansprüche

1. Verfahren zur fehlersicheren Bedienung eines Gerätes (1) aus dem Bereich der industriellen Automatisierungstechnik, welches ein Eingabemittel (2) umfasst, mit dem zum Auslösen von Bedienfunktionen wenigstens zweidimensionale Gesten eines Benutzers erkennbar sind, mit den Schritten:
- Definition fehlersicherer Gesten, die das unbeabsichtigte Auslösen einer Bedienfunktion mit hoher Wahrscheinlichkeit verhindern,
- Verknüpfung der fehlersicheren Gesten mit Bedienfunktionen,
- Erkennen der fehlersicheren Gesten bei der Bedienung des Gerätes (1) durch den Benutzer und Auslösen der einer bestimmten fehlersicheren Geste jeweils zugeordneten Bedienfunktion, wobei sicherheitsrelevante Bedienfunktionen ausschließlich durch fehlersichere Gesten ausgelöst werden.

2. Verfahren nach Anspruch 1, wobei in einer fehlersicheren Betriebsart des Gerätes durch das Eingabemittel (2) ausschließlich solche Bedienfunktionen auslösbar sind, die mit einer fehlersicheren Geste verknüpft sind.

3. Verfahren nach Anspruch 1 oder 2, wobei eine fehlersichere Geste zum Einschalten des Gerätes (1) definiert wird.

4. Verfahren nach einem der Ansprüche 1 bis 3, wobei eine fehlersichere Geste zum Ausschalten des Gerätes (1) definiert wird.

5. Verfahren nach einem der Ansprüche 1 bis 4, wobei wenigstens eine fehlersichere Geste zur Funktionsüberprüfung des Eingabemittels (2) definiert wird.

6. Verfahren nach einem der Ansprüche 1 bis 5, wobei wenigstens eine fehlersichere Geste definiert wird, durch die unmittelbar vor dieser Geste vorgenommene Bedienhandlungen bestätigt und den Bedienhandlungen zugeordnete Bedienfunktionen ausgelöst werden.

7. Verfahren nach einem der Ansprüche 1 bis 6, wobei wenigstens eine fehlersichere Geste zur Freigabe des Eingabemittels (2) für eine bestimmte Zeitdauer definiert wird.

8. Gerät (1) aus dem Bereich der industriellen Automatisierungstechnik zur Durchführung eines Verfahrens nach einem der Ansprüche 1 bis 7, umfassend:
- Speichermittel zum Speichern von Daten bezüglich fehlersicherer Gesten,
- Eingabemittel (2) zur Betätigung durch einen Benutzer, wobei durch die Eingabemittel (2) wenigstens zweidimensionale Gesten des Benutzers erfassbar sind,
- Mittel zum Erkennen der fehlersicheren Gesten bei der Bedienung durch den Benutzer und Auslösen der einer bestimmten fehlersicheren Geste jeweils zugeordneten Bedienfunktion, wobei sicherheitsrelevante Bedienfunktionen ausschließlich durch fehlersichere Gesten auslösbar sind.

9. Gerät (1) nach Anspruch 8 mit Mittel zum Betreiben des Gerätes in einer fehlersicheren Betriebsart, in der durch das Eingabemittel (2) ausschließlich solche Bedienfunktionen auslösbar sind, die mit einer fehlersicheren Geste verknüpft sind.

10. Gerät (1) nach Anspruch 8 oder 9 mit Mitteln zur Definition fehlersicherer Gesten, die das unbeabsichtigte Auslösen einer Bedienfunktion mit hoher Wahrscheinlichkeit verhindern.

11. Gerät (1) nach einem der Ansprüche 8 bis 10 mit Mitteln zur Verknüpfung der fehlersicheren Gesten mit Bedienfunktionen.

12. Gerät (1) nach einem der Ansprüche 8 bis 11, wobei wenigstens eine fehlersichere Geste zum Einschalten des Gerätes (1) definiert ist.

13. Gerät (1) nach einem der Ansprüche 8 bis 12, wobei wenigstens eine fehlersichere Geste zum Ausschalten des Gerätes (1) definiert ist.

14. Gerät (1) nach einem der Ansprüche 8 bis 13, wobei wenigstens eine Geste zur Funktionsüberprüfung des Eingabemittels (2) definierbar ist.

15. Gerät (1) nach einem der Ansprüche 8 bis 14, wobei wenigstens eine fehlersichere Geste definiert ist, durch die unmittelbar vor Eingabe dieser fehlersicheren Geste vorgenommene Bedienhandlungen bestätigbar und den Bedienhandlungen zugeordnete Bedienfunktionen auslösbar sind.

16. Gerät (1) nach einem der Ansprüche 8 bis 15, wobei wenigstens eine fehlersichere Geste zur Freigabe des Eingabemittels (2) für eine bestimmte Zeitdauer definiert ist.

17. Gerät (1) nach einem der Ansprüche 8 bis 16 mit einem Touchscreen (2) zur Eingabe zweidimensionaler, fehlersicherer Gesten.
